# EUROPEAN PATENT APPLICATION

(11) **EP 4 778 700 A2**
(43) Date of publication of application: **22.07.2026**
(21) Application number: 26177845.0
(22) Date of filing: 11.05.2026
(51) Int. Cl.: B29C 64/124, B29C 64/182, B29C 64/245, B29C 64/259, B33Y 10/00, B33Y 30/00, B33Y 40/00

(54) **CONTAINER FOR PRINTING CAPSULE, PRINTING CAPSULE KIT, AND PRINTING CAPSULE**

(30) Priority: 31.07.2025 CN 202511073917; 30.09.2025 CN 202511433214; 08.12.2025 CN 202522604855 U
(71) Applicant: Shining 3D Tech Co., Ltd., Hangzhou, Zhejiang 311258 (CN)
(72) Inventor: QIAN, Huili, Hangzhou, Zhejiang 311258 (CN); ZHAO, Xiaobo, Hangzhou, Zhejiang 311258 (CN); CHEN, Da, Hangzhou, Zhejiang 311258 (CN); WU, Jun, Hangzhou, Zhejiang 311258 (CN); WU, Siyuan, Hangzhou, Zhejiang 311258 (CN)
(74) Representative: Dai, Simin

(57) **Abstract**

The present application provides a container for a printing capsule, a printing capsule kit, and a printing capsule. The container includes a housing (110). The housing includes a base (200) and a cover (300). The base (200) and the cover (300) together define a cavity (111) capable of accommodating at least one printing capsule (600). The housing (110) is configured to limit a position of the printing capsule (600).

## Description

### TECHNICAL FIELD

The present application relates to the field of 3D printing technology, and in particular to a container for a printing capsule, a printing capsule kit, and a printing capsule.

### BACKGROUND

The forming process of light-curing 3D printing is as follows: a printing platform is immersed in liquid photosensitive resin, and an ultraviolet light source (such as a laser or a projector) selectively irradiates a resin tank according to slice patterns of a model, causing the resin in specific areas to cure and adhere to the printing platform. The printing platform is then raised to allow new resin to flow in. Layers are accumulated in this manner, ultimately "growing" a three-dimensional object from the liquid surface. The main components include a resin tank for containing the printing material, a light source system (laser or projector) for generating ultraviolet light, a printing platform configured to move, and a control system for controlling the overall operation.

Conventional light-curing 3D printing devices are generally equipped with an open rectangular resin tank. The length and width of the tank can range from tens to hundreds of centimeters. Devices of different specifications are suitable for printing objects of different sizes. During use, printing material is poured into the resin tank. This design has drawbacks: for different printing objects, a user needs to manually estimate the amount of material to be used, and also estimate the amount of printing material to be poured. Pouring too much material tends to cause waste, while pouring too little material may lead to printing failure.

### SUMMARY

The present application provides a container for a printing capsule, a printing capsule kit, and a printing capsule. By providing a housing that is configured to limit a position of the printing capsule, the problem that the printing capsule is prone to shaking and being damaged during transportation is solved.

In a first aspect, the present application provides a container for a printing capsule, including:
a housing, where the housing includes a base and a cover, the base and the cover together define a cavity capable of accommodating at least one printing capsule, and the housing is configured to limit a position of the printing capsule.

The container for the printing capsule provided in the first aspect of the present application includes a housing. The housing includes a base and a cover. The base and the cover together define a cavity capable of accommodating at least one printing capsule. The housing is configured to limit a position of the printing capsule. Thus, with the container provided in the present application, by providing the housing such that the housing limits the printing capsule, the problem that the printing capsule is prone to shaking and being damaged during transportation is solved.

In some embodiments, the base and the cover are integrally formed by a blister process, and both the base and the cover are made of a non-transparent material, forming a light-tight sealed space for blocking external light.

In some embodiments, the housing is provided with a limiting structure; when the base and the cover are closed, the limiting structure contacts the printing capsule located within the cavity to limit movement of the printing capsule within the cavity;
the limiting structure includes a first limiting structure and a second limiting structure, the first limiting structure being provided on one of the base or the cover;
the second limiting structure being provided on another one of the base or the cover, the first limiting structure cooperating with the second limiting structure;
one of the first limiting structure or the second limiting structure fits a bottom of the printing capsule to limit movement of the bottom;
another one of the first limiting structure or the second limiting structure fits a top of the printing capsule to limit movement of the top.

In some embodiments, the second limiting structure includes a circumferential protruding ring;
the circumferential protruding ring is configured to limit radial movement of the printing capsule, and an area of the housing enclosed by the circumferential protruding ring is configured to limit axial movement of the printing capsule.

In some embodiments, the base and the cover are openably and closably connected via a connection component, the connection component including: a connecting member and a snap-fit structure;
the connecting member is located between the base and the cover for connecting the base and the cover;
the snap-fit structure is provided at a peripheral edge of the housing for locking the base and cover in a closed state.

In some embodiments, the snap-fit structure includes: a first snap-fit structure and a second snap-fit structure;
one of the first snap-fit structure or the second snap-fit structure is located at a peripheral edge of the base, and another one of the first snap-fit structure or the second snap-fit structure is located at a peripheral edge of the cover; the first snap-fit structure and the second snap-fit structure are engaged with each other to secure the base and cover in the closed state.

In some embodiments, the limiting structure is configured to accommodate and secure multiple printing capsules, and first limiting structures and second limiting structures respectively match shapes of the multiple printing capsules to independently limit a position of each of the multiple printing capsules.

In some embodiments, the base is provided with a first opening-assist structure, and the cover is provided with a second opening-assist structure engaging with the first opening-assist structure;
one of the first opening-assist structure or the second opening-assist structure has a clearance, and another one of the first opening-assist structure or the second opening-assist structure is arranged to align with the clearance to facilitate user opening.

In some embodiments, a bottom of the base is provided with a flat support portion, and the support portion enables the printing capsule to be stably placed in the housing.

In a second aspect, the present application provides a printing capsule kit, including the container for the printing capsule described above and a printing capsule enclosed in the container.

In a third aspect, the present application provides a printing capsule, where the printing capsule is formed with a receiving cavity and a light-transmissive component located on one side of the receiving cavity.

In some embodiments, the printing capsule includes a build platform, where a forming cavity is formed between the build platform and the light-transmissive component, light is projected into the forming cavity through the light-transmissive component, and the receiving cavity includes the forming cavity.

In some embodiments, the printing capsule includes an outer cylinder and an inner cylinder, the outer cylinder and the inner cylinder are engaged in a plug-in manner, with the inner cylinder disposed in a cavity of the outer cylinder, an inner-side wall of the outer cylinder is sealed to an outer-side wall of the inner cylinder, and the cavity of the outer cylinder communicates with a cavity of the inner cylinder to form the closed receiving cavity; the light-transmissive component is provided at a bottom of the outer cylinder, and the build platform is provided on an end of the inner cylinder facing the light-transmissive component.

It should be understood that the second and third aspects of the present application correspond to the technical solution of the first aspect, and the beneficial effects achieved by these aspects and their possible implementations are similar and will not be repeated.

In addition to the technical problems to be solved, the technical features constituting the technical solutions, and the beneficial effects brought about by these technical features as described above, other technical problems that can be solved, other technical features included in the technical solutions, and the beneficial effects brought about by these technical features of the container for the printing capsule, the printing capsule kit, and the printing capsule provided in the present application will be further described in detail in the detailed description.

### BRIEF DESCRIPTION OF DRAWINGS

To more clearly illustrate the technical solutions in the embodiments of the present application or in the prior art, the drawings required for use in the description of the embodiments of the present application or the prior art will be briefly introduced below. It is apparent that the drawings described below are only some of the embodiments of the present application. These drawings and the textual descriptions are not intended to limit the scope of the inventive concept in any way, but rather to illustrate the concept of the present application for a person skilled in the art by reference to specific embodiments. For a person of ordinary skill in the art, other drawings may be obtained from these drawings without creative efforts.
FIG. 1 is a schematic structural view of a container in a closed state according to an embodiment of the present application.
FIG. 2 is a schematic structural view of a container in an open state according to an embodiment of the present application.
FIG. 3 is a partial cross-sectional view of a container accommodating a printing capsule according to an embodiment of the present application.
FIG. 4 is a partial enlarged view of a snap-fit structure of a container according to an embodiment of the present application.
FIG. 5 is a schematic cross-sectional view of the printing capsule according to an embodiment of the present application.

Reference numerals:
100-container; 110-housing; 111-cavity; 120-limiting structure;
200-base; 210-first limiting structure; 211-first recessed structure; 220-first opening-assist structure; 221-third recessed structure; 230-clearance; 240-support portion;
300-cover; 310-second limiting structure; 311-first protruding structure; 312-circumferential protruding ring; 320-second opening-assist structure; 321-third protruding structure;
400-connection component; 410-connecting member;
500-snap-fit structure; 510-first snap-fit structure; 511-second recessed structure; 520-second snap-fit structure; 521-second protruding structure; 522-anti-detachment hook;
600-printing capsule; 611-outer cylinder; 612-inner cylinder; 620-light-transmissive component; 630-build platform; 631-forming cavity.

### DETAILED DESCRIPTION

The technical solutions in the embodiments of the present application will be clearly and completely described below with reference to the accompanying drawings in the embodiments of the present application. It is apparent that the described embodiments are only some of the embodiments of the present application, rather than all of the embodiments. All other embodiments obtained by a person of ordinary skill in the art based on the embodiments of the present application without creative efforts shall fall within the protection scope of the present application.

As described in the background, conventional light-curing 3D printing devices are equipped with an open rectangular resin tank. The length and width of the tank can range from tens to hundreds of centimeters. Devices of different specifications are suitable for printing objects of different sizes. During use, printing material is poured into the resin tank. This design has drawbacks: for different printing objects, a user needs to manually estimate the amount of material to be used, and also estimate the amount of printing material to be poured. Pouring too much material tends to cause waste, while pouring too little material may lead to printing failure.

To address the above technical problem, a first aspect of the embodiments of the present application provides a printing capsule. The printing capsule is formed with a receiving cavity and a light-transmissive component located on one side of the receiving cavity. The printing capsule provided in the embodiments of the present application can be directly installed in a 3D printing device for printing with pre-filled printing material. The printing process does not require manual measurement and filling of material. By providing printing capsules of different specifications for different printing objects, standardized and convenient supply of printing materials is achieved.

A second aspect of the embodiments of the present application provides a container for a printing capsule. The container includes a housing. The housing includes a base and a cover. The base and the cover together define a cavity capable of accommodating at least one printing capsule. The housing is configured to limit a position of the printing capsule. Thus, by providing the housing that limits the printing capsule, the container provided in the present application solves the problem that the printing capsule is prone to shaking and being damaged during transportation.

A third aspect of the embodiments of the present application provides a printing capsule kit. The printing capsule kit includes the printing capsule described above and the container for a printing capsule described above. The printing capsule is enclosed in the container.

In order to make the above objectives, features, and advantages of the embodiments of the present application more apparent and understandable, the technical solutions in the embodiments of the present application will be clearly and completely described below with reference to the accompanying drawings. It is apparent that the described embodiments are only some of the embodiments of the present application, rather than all of the embodiments. All other embodiments obtained by a person of ordinary skill in the art based on the embodiments of the present application without making creative efforts shall fall within the protection scope of the present application.

The embodiments of the present application provide a container for a printing capsule, a printing capsule kit, and a printing capsule. By providing a housing such that the housing limits the printing capsule, the problem that the printing capsule is prone to shaking and being damaged during transportation is solved. The specific structures of the container for a printing capsule, the printing capsule kit, and the printing capsule provided in the embodiments of the present application are described below with reference to the accompanying drawings.

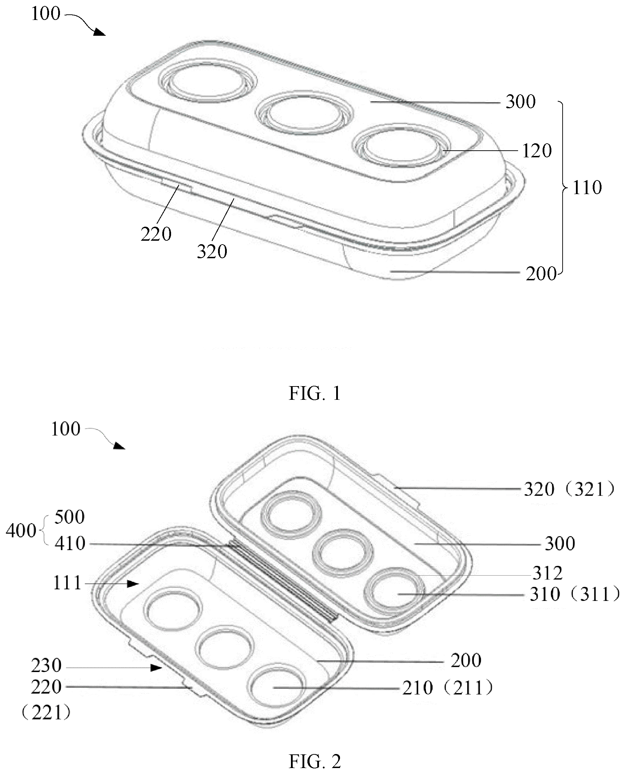

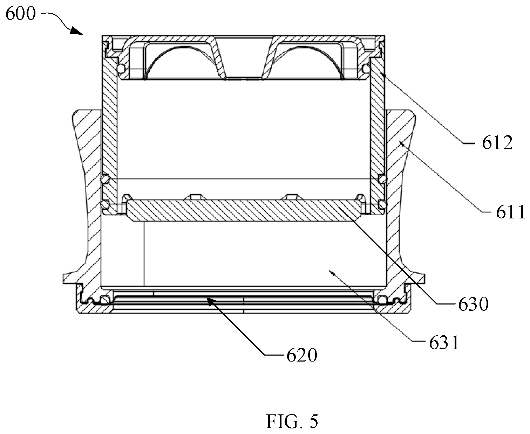

Referring to FIGs. 1, 2, and 3 and with further reference to FIG. 5, a first aspect of the embodiments of the present application provides a container 100 for a printing capsule 600. The container 100 for the printing capsule 600 may include a housing 110, a limiting structure 120, and a connection component 400. The housing 110 may include a base 200 and a cover 300. In some embodiments, the base 200 and the cover 300 may together define a cavity 111. It is to be understood that the cavity 111 is adapted to the printing capsule 600, and the cavity 111 can be used to accommodate at least one printing capsule 600. The housing 110 is configured to limit a position of the printing capsule 600.

Continuing to refer to FIG. 1, based on the above embodiment, the limiting structure 120 may be provided on the housing 110. It is to be understood that when the base 200 and the cover 300 are closed, the limiting structure 120 contacts the printing capsule 600 located within the cavity 111, thereby limiting movement of the printing capsule 600 within the cavity 111. In some embodiments, the limiting structure 120 may be provided on the base 200. Alternatively, in another possible implementation, the limiting structure 120 may be provided on the cover 300. This is not limited in the embodiments of the present application.

Continuing to refer to FIG. 2, based on the above embodiment, it is to be understood that the connection component 400 can be used to connect the base 200 and the cover 300, so as to facilitate closing of the container 100.

Thus, by providing the limiting structure 120 on the housing 110 to limit and secure the printing capsule 600, and using the connection component 400 to achieve closing of the container 100, the container 100 provided in the present application solves the problem that the printing capsule 600 is prone to shaking and being damaged during transportation.

In an example, the cover 300 may be a plastic film seal. The plastic film may be heat-sealed or adhered to the base 200 to form a sealed package, where the structure of the cover 300 is similar to a common blister pack for tablets, which is intuitive, easy to operate, and low in cost.

In some embodiments, the printing capsule 600 may be a printing capsule 600 filled with resin, or may be a printing capsule 600 not filled with resin. This is not limited in the embodiments of the present application. That is, the printing capsule kit may include a container filled with resin and the resin contained therein, or may refer only to the container for containing resin.

It is to be understood that the printing capsule 600 can be directly installed on a 3D printing device for printing. Based on the above embodiment, in some embodiments, both the base 200 and the cover 300 may be made of a light-blocking non-transparent material. In an example, both the base 200 and the cover 300 may be made of a black or gray anti-static material. This is not limited in the embodiments of the present application. It is to be understood that by forming the base 200 and the cover 300 from a light-blocking non-transparent material, a light-tight sealed space is formed for blocking external light. While ensuring transportation safety, the various requirements of the resin material in the printing capsule 600, such as light blocking, dust prevention, and anti-static protection, are met, thereby improving the overall user experience. In some embodiments, at least portions of the base 200 and the cover 300 may be made of a light-blocking non-transparent material, so as to achieve partial light blocking for the printing capsule 600.

In this way, when the resin in the printing capsule 600 needs to be reused, it can be stored in the container 100, thereby providing light blocking and dust prevention, and ensuring that the printing capsule 600 can be reused normally.

In the embodiments of the present application, in an example, the container 100 may be manufactured using a blister process. The base 200, the cover 300, the limiting structure 120, and the connection component 400 may all be integrally formed by a blister process, so that the container 100 has lightweight characteristics and is suitable for disposable use scenarios. In addition, the container 100 may also be in the form of a cardboard outer package/plastic outer package plus a paper inner liner/foam inner liner. This is not limited in the embodiments of the present application. Relatively speaking, the container 100 manufactured using a blister process has a more diverse appearance and lower cost.

Continuing to refer to FIG. 2, based on the above embodiment, the limiting structure 120 may further include a first limiting structure 210 and a second limiting structure 310. In some embodiments, the first limiting structure 210 may be provided on one of the base 200 or the cover 300, and the second limiting structure 310 may be provided on another one of the base 200 or the cover 300. It is to be understood that the first limiting structure 210 cooperates with the second limiting structure 310.

One of the first limiting structure 210 or the second limiting structure 310 may fit a bottom of the printing capsule 600 to limit movement of the bottom of the printing capsule 600. Correspondingly, another one of the first limiting structure 210 or the second limiting structure 310 may fit a top of the printing capsule 600 to limit movement of the top of the printing capsule 600.

In an example, the base 200 may be provided with the first limiting structure 210. Correspondingly, the cover 300 may be provided with the second limiting structure 310. It is to be understood that the first limiting structure 210 may cooperate with the second limiting structure 310. In the embodiments of the present application, when the base 200 and the cover 300 are closed, the first limiting structure 210 and the second limiting structure 310 can act together on the printing capsule 600, thereby limiting movement of the printing capsule 600.

Continuing to refer to FIG. 2, based on the above embodiment, in some embodiments, the first limiting structure 210 may include a first recessed structure 211. In the embodiments of the present application, the first recessed structure 211 is provided protruding outward relative to the base 200. It is to be understood that the first limiting structure 210 may fit a bottom of the printing capsule 600, so that the first limiting structure 210 can be used to limit the bottom of the printing capsule 600.

Continuing to refer to FIG. 2, based on the above embodiment, in some embodiments, the second limiting structure 310 may include a first protruding structure 311. In the embodiments of the present application, the first protruding structure 311 is provided protruding inward relative to the cover 300. It is to be understood that the second limiting structure 310 may fit a top of the printing capsule 600, so that the second limiting structure 310 can be used to limit the top of the printing capsule 600.

In some embodiments, the printing capsule 600 may be cylindrical. Correspondingly, the first limiting structure 210 and the second limiting structure 310 may be cylindrical. The printing capsule 600 may also be rectangular, and correspondingly, the first limiting structure 210 and the second limiting structure 310 may be rectangular. This is not limited in the embodiments of the present application.

Alternatively, in some embodiments, a limiting structure adapted to the limiting structure 120 may also be provided on an outer surface of the printing capsule 600. This is not limited in the embodiments of the present application.

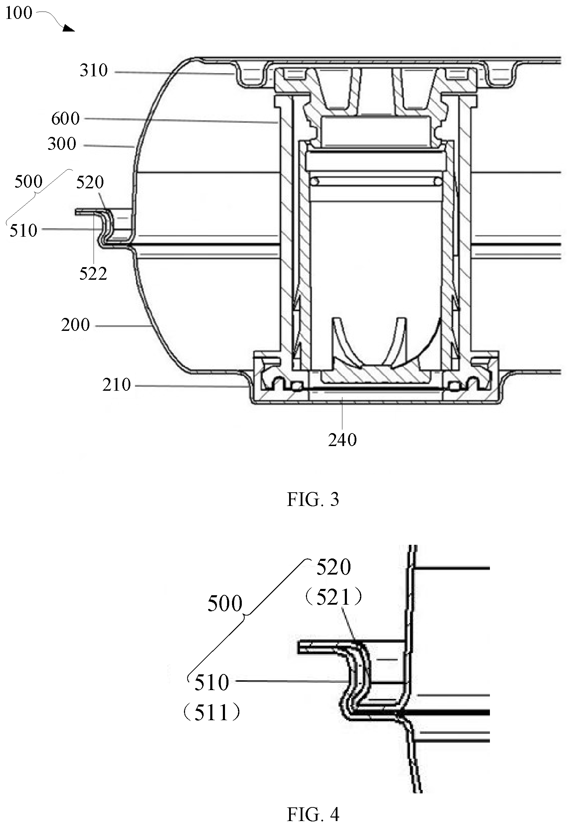

Continuing to refer to FIGs. 2 and 3, based on the above embodiment, in some embodiments, the second limiting structure 310 may include a circumferential protruding ring 312. In the embodiments of the present application, the circumferential protruding ring 312 may abut against a top peripheral edge of the printing capsule 600, and an area of the housing enclosed by the circumferential protruding ring 312 may abut against a top wall of the printing capsule 600. It is to be understood that the circumferential protruding ring 312 can be used to limit radial movement of the printing capsule 600, and the area of the housing enclosed by the circumferential protruding ring 312 can be used to limit axial movement of the printing capsule 600. In this way, the printing capsule 600 is limited and secured, preventing the printing capsule 600 from shaking and being damaged during transportation.

In other embodiments, in an example, the first limiting structure 210 may include a protruding structure, and the second limiting structure 310 may include a recessed structure. This is not limited in the embodiments of the present application. Continuing to refer to FIG. 2, based on the above embodiment, the limiting structure 120 may be configured to accommodate and secure multiple printing capsules 600. First limiting structures 210 and second limiting structures 310 may each match the shape of each printing capsule 600, so as to independently limit a position of each printing capsule 600.

In some embodiments, the number of the first limiting structures 210 and the number of the second limiting structures 310 may be one or more. This is not limited in the embodiments of the present application. In the embodiments of the present application, three first limiting structures 210 and three second limiting structures 310 are taken as an example. The three first limiting structures 210 may be spaced apart along a length direction of the base 200. Correspondingly, the three second limiting structures 310 may be spaced apart along a length direction of the cover 300. Each of the first limiting structures 210 is arranged corresponding to a respective one of the second limiting structures 310.

Continuing to refer to FIG. 2, based on the above embodiment, the connection component 400 may include a connecting member 410. The connecting member 410 may be located between the base 200 and the cover 300. In the embodiments of the present application, it is to be understood that the connecting member 410 can be used to connect the base 200 and the cover 300, so that the base 200 and the cover 300 are connected via the connecting member 410.

Of course, in other embodiments, the base 200 and the cover 300 may not be connected via the connecting member 410, but may be directly snapped together. This is not limited in the embodiments of the present application.

Continuing to refer to FIG. 3, based on the above embodiment, the connection component 400 may further include a snap-fit structure 500. The snap-fit structure 500 may be provided at a peripheral edge of the housing 110. Further, the peripheral edges of the base 200 and the cover 300 may be respectively provided with engaged snap-fit structures 500. In the embodiments of the present application, it is to be understood that the snap-fit structure 500 can be used to lock the closed base 200 and cover 300 together, thereby preventing the container 100 from opening during transportation and causing the printing capsule 600 to scatter.

Referring to FIGs. 3 and 4, based on the above embodiment, the snap-fit structure 500 may include: a first snap-fit structure 510 and a second snap-fit structure 520. One of the first snap-fit structure 510 or the second snap-fit structure 520 may be located at a peripheral edge of the base 200, and another one of the first snap-fit structure 510 or the second snap-fit structure 520 may be located at a peripheral edge of the cover 300. In the embodiments of the present application, the first snap-fit structure 510 and the second snap-fit structure 520 are engaged with each other, thereby securing the closed base 200 and cover 300.

In some embodiments, the first snap-fit structure 510 may be located at the peripheral edge of the base 200, and the second snap-fit structure 520 may be located at the peripheral edge of the cover 300. Alternatively, in another possible implementation, the first snap-fit structure 510 may be located at the peripheral edge of the cover 300, and the second snap-fit structure 520 may be located at the peripheral edge of the base 200. This is not limited in the embodiments of the present application.

Continuing to refer to FIG. 4, based on the above embodiment, in some embodiments, the first snap-fit structure 510 may include a second recessed structure 511, and the second snap-fit structure 520 may include a second protruding structure 521. In an example, the first snap-fit structure 510 may include a groove structure located at the peripheral edge of the base 200, and the second snap-fit structure 520 may include a protruding structure located at the peripheral edge of the cover 300. In the embodiments of the present application, it is to be understood that the second recessed structure 511 is adapted in shape to the second protruding structure 521, so that the second recessed structure 511 is engaged with the second protruding structure 521, thereby locking the base 200 and the cover 300.

Continuing to refer to FIG. 3, the first snap-fit structure 510 may be formed by bending the peripheral edge of the base 200 outward and extending. Its cross-section is approximately U-shaped, forming a groove structure with an upward opening. It is to be understood that the first snap-fit structure 510 is integrally formed by a blister process, and the wall thickness of the first snap-fit structure 510 is consistent with that of the housing 110, forming a uniform thin-walled structure.

Additionally, the second snap-fit structure 520 corresponds to the first snap-fit structure 510. The second snap-fit structure 520 may extend outward and slightly downward from the peripheral edge of the cover 300, resembling an elastic cantilever beam. The end of the cantilever beam is provided with an anti-detachment hook 522. It is to be understood that the second snap-fit structure 520 is integrally formed by a blister process, and the wall thickness of the second snap-fit structure 520 is consistent with that of the housing 110, forming a uniform thin-walled structure.

When a user closes the base 200 and the cover 300, the cover 300 is pressed downward, and the anti-detachment hook 522 of the second snap-fit structure 520 contacts the opening edge of the first snap-fit structure 510. Under continuous pressure, the second snap-fit structure 520 bends and deforms inward, allowing the anti-detachment hook 522 to slide into the interior of the first snap-fit structure 510, effectively preventing the container 100 from accidentally opening due to vibration during transportation or handling. Thus, by providing the engaged first snap-fit structure 510 and second snap-fit structure 520, a certain amount of force is required to close and open the container 100, preventing the container 100 from opening during transportation and causing the printing capsule 600 to scatter.

Continuing to refer to FIG. 2, based on the above embodiment, the base 200 may be provided with a first opening-assist structure 220, and the cover 300 may be provided with a second opening-assist structure 320. The first opening-assist structure 220 engages/cooperates with the second opening-assist structure 320, so that force can be more easily applied when opening the container 100.

In some embodiments, one of the first opening-assist structure 220 or the second opening-assist structure 320 may have a clearance 230, and another one of the first opening-assist structure 220 or the second opening-assist structure 320 may be arranged to align with the clearance 230 to facilitate user opening.

In an example, in some embodiments, the number of the first opening-assist structures 220 may be two. The two first opening-assist structures 220 are spaced apart along the peripheral edge of the base 200, and the spacing between the two first opening-assist structures 220 forms a clearance 230. In addition, when the container 100 is in a closed state, the second opening-assist structure 320 can be arranged to align with the clearance 230, thereby facilitating user opening of the container 100 via the first opening-assist structures 220 and the second opening-assist structure 320.

Alternatively, in another possible implementation, the number of the second opening-assist structures 320 may be two. The two second opening-assist structures 320 are spaced apart along the peripheral edge of the cover 300, and the spacing between the two second opening-assist structures 320 forms a clearance 230. In addition, when the container 100 is in a closed state, the first opening-assist structure 220 can be arranged to align with the clearance 230, thereby facilitating user opening of the container 100 via the first opening-assist structure 220 and the second opening-assist structures 320.

Continuing to refer to FIG. 2, based on the above embodiment, one of the first opening-assist structure 220 or the second opening-assist structure 320 may include a circumferentially arranged third recessed structure 221, and another one of the first opening-assist structure 220 or the second opening-assist structure 320 may include a circumferentially arranged third protruding structure 321. The third recessed structure 221 engages/cooperates with the third protruding structure 321, so as to facilitate user opening of the container 100.

In some embodiments, the first opening-assist structure 220 may include a circumferentially arranged groove structure, and the second opening-assist structure 320 may be a circumferentially arranged protruding structure. Alternatively, in another possible implementation, the first opening-assist structure 220 may be a circumferentially arranged protruding structure, and the second opening-assist structure 320 may be a circumferentially arranged groove structure. This is not limited in the embodiments of the present application.

In some embodiments, as shown in FIG. 3, a bottom of the base 200 may be provided with a flat support portion 240. In the embodiments of the present application, it is to be understood that the support portion 240 enables the printing capsule 600 to be stably placed in the housing 110, thereby preventing liquid resin in the printing capsule 600 from spilling due to instability.

A second aspect of the embodiments of the present application provides a printing capsule kit (not shown in the figures). The printing capsule kit may include the container 100 for the printing capsule 600 and the printing capsule 600. In the embodiments of the present application, it is to be understood that the printing capsule 600 may be enclosed in the container 100.

In the embodiments of the present application, by providing the first limiting structure 210 and the second limiting structure 310 on the base 200 and the cover 300, respectively, to secure the printing capsule 600, and using the snap-fit structure to close the container 100, the container 100 provided in the embodiments of the present application solves the problem that the printing capsule 600 is prone to shaking and being damaged during transportation.

Referring to FIG. 5, a third aspect of the embodiments of the present application provides a printing capsule 600. The printing capsule is formed with a receiving cavity and a light-transmissive component 620 located on one side of the receiving cavity. The receiving cavity is pre-filled with printing material such as resin. The printing capsule 600 is installed in a 3D printing device, and a light engine in the 3D printing device projects light. The light is projected through the light-transmissive component 620 into the receiving cavity, causing the printing material in the receiving cavity to cure and form. A printing capsule of a corresponding specification is selected according to the printing object. The printing capsule is ready to use and disposable, requiring no manual filling of material, which is convenient and fast. It also solves the problems of printing failure due to insufficient filling or material waste due to excessive filling in manual filling. Moreover, there is no need to configure an automatic filling module in the 3D printing device. Automatic filling 3D printing devices are complex, bulky, and costly, whereas the configured 3D printing device is simple, lightweight, and low-cost. Of course, the printing capsule 600 can also be filled with material at the time of use. For users, although it is not as convenient as a pre-filled printing capsule, there is no need to deliberate over the amount of material when filling, the filling operation is simple, and there is no problem of insufficient or excessive filling. The configured 3D printing device is simple, lightweight, and low-cost.

The printing capsule 600 includes a build platform 630. A forming cavity 631 is formed between the build platform 630 and the light-transmissive component 620. Light is projected into the forming cavity 631 through the light-transmissive component 620. The receiving cavity includes the forming cavity 631. Light is projected through the light-transmissive component 620 into the forming cavity 631, causing the printing material in the forming cavity 631 to cure and form, adhering to the build platform 630.

The printing capsule 600 includes an outer cylinder 611 and an inner cylinder 612. The outer cylinder 611 and the inner cylinder 612 are engaged in a plug-in manner, with the inner cylinder 612 disposed in a cavity of the outer cylinder 611. An inner-side wall of the outer cylinder 611 is sealed to an outer-side wall of the inner cylinder 612, and the cavity of the outer cylinder 611 communicates with a cavity of the inner cylinder 612 to form the closed receiving cavity. The light-transmissive component 620 is provided at a bottom of the outer cylinder 611, and the build platform 630 is provided on an end of the inner cylinder 612 facing the light-transmissive component 620.

In an embodiment, the outer cylinder 611 and the inner cylinder 612 are both configured as circular cylinders. The outer cylinder 611 is provided with the light-transmissive component 620 (e.g., a light-transmissive film) at one end along its axial direction, and is open at the other end. The inner cylinder 612 is closed at one end along its axial direction and is provided with the build platform 630 at the other end. The outer cylinder 611 and the inner cylinder 612 are engaged in a plug-in manner, specifically, the inner cylinder 612 is plugged into the cavity of the outer cylinder 611, with the build platform 630 facing the light-transmissive component 620. The build platform 630 is provided with a communication opening. The inner-side wall of the outer cylinder 611 is sealed to the outer-side wall of the inner cylinder 612. The inner-side wall of the outer cylinder 611, the light-transmissive component 620, the outer-side wall of the inner cylinder 612, and the build platform 630 together define the forming cavity 631 (the forming cavity 631 is at least part of the cavity of the outer cylinder 611). The communication opening communicates the forming cavity 631 with the cavity of the inner cylinder. The forming cavity 631 and the cavity of the inner cylinder together constitute the receiving cavity. Printing material is contained in the receiving cavity. As the inner cylinder 612 moves axially away from the light-transmissive component 620, the forming cavity 631 expands in volume, and the printing material in the cavity of the inner cylinder flows into the forming cavity 631. As the inner cylinder 612 moves axially toward the light-transmissive component 620, the forming cavity 631 decreases in volume, and the printing material in the forming cavity 631 returns to the cavity of the inner cylinder.

By increasing the air pressure in the receiving cavity, an upward force is applied to the build platform 630 and a downward force is applied to the light-transmissive component 620, which can drive the build platform 630 to move upward, accelerating the separation of the light-transmissive component 620 from the cured layer and speeding up the backflow of the printing material. Of course, the build platform 630 may also be connected to a driving component on the 3D printing device and be driven by the driving component to move back and forth.

In the embodiments of the present application, the shape and size of the inner cylinder 612 match the shape and size of the outer cylinder 611 to achieve a sliding seal upon plug-in engagement. The outer cylinder 611 and the inner cylinder 612 may also be configured as square cylinders, elliptical cylinders, or other cylindrical shapes.

In an embodiment, the printing capsule 600 may include only the outer cylinder 611. The open end of the outer cylinder 611 is sealed, and the cavity of the outer cylinder 611 serves as the receiving cavity. The build platform 630 is placed in the receiving cavity. When in use, the seal is removed, and the printing capsule 600 is installed in the 3D printing device. Specifically, the outer cylinder 611 is locked to a fixing base of the 3D printing device, and the build platform 630 is directly connected to the driving component of the 3D printing device. Of course, the build platform 630 may also be directly installed in the 3D printing device without being sealed in the outer cylinder 611.

The various embodiments or implementations in this specification are described in a progressive manner, with each embodiment focusing on its differences from other embodiments. The same or similar parts between the various embodiments may be referred to each other.

It should be noted that phrases such as "during specific implementation," "in some embodiments," "in this embodiment," "exemplarily," etc., mentioned in the specification indicate that the described embodiment may include a particular feature, structure, or characteristic, but not every embodiment necessarily includes that particular feature, structure, or characteristic. Moreover, such phrases do not necessarily refer to the same embodiment. Furthermore, when a particular feature, structure, or characteristic is described in connection with an embodiment, it is within the knowledge of a person skilled in the art to implement such feature, structure, or characteristic in connection with other embodiments, whether explicitly described or not.

Generally speaking, terms should be understood, at least in part, from their context of use. For example, the term "one or more" as used herein may be used to describe any feature, structure, or characteristic in a singular sense, or may be used to describe a combination of features, structures, or characteristics in a plural sense, depending at least in part on the context. Similarly, terms such as "a," "an," or "the" may be understood to convey a singular usage or a plural usage, depending at least in part on the context.

It should be readily understood that the expressions "on," "above," and "over" in the present disclosure should be interpreted in the broadest manner, such that "on" means not only "directly on" something but also includes the meaning of "on something" with intermediate features or layers therebetween, and "above" or "over" includes not only the meaning of "above" or "over" something but may also include the meaning of "above" or "over" something with no intermediate features or layers therebetween (i.e., directly on something).

Furthermore, spatially relative terms, such as "below," "beneath," "under," "above," "over," etc., may be used herein for ease of description to describe the relationship of one element or feature to another element or feature as illustrated in the figures. The spatially relative terms are intended to encompass different orientations of the device in use or operation in addition to the orientation depicted in the figures. The device may be otherwise oriented (rotated 90 degrees or at other orientations), and the spatially relative descriptors used herein may likewise be interpreted accordingly.

Finally, it should be noted that a person skilled in the art will readily appreciate other embodiments of the present application after considering the specification and practicing the application disclosed herein. The present application is intended to cover any variations, uses, or adaptations of the present application that follow the general principles of the present application and include common general knowledge or customary technical means in the art not disclosed in the present application. The present application is not limited to the precise structures described above and illustrated in the accompanying drawings, and various modifications and changes may be made without departing from the scope thereof. The scope of the present application is to be limited only by the appended claims.

## Claims

1. A container for a printing capsule, comprising:
a housing (110), wherein the housing (110) comprises a base (200) and a cover (300), the base (200) and the cover (300) together define a cavity (111) capable of accommodating at least one printing capsule (600), and the housing (110) is configured to limit a position of the printing capsule (600).

2. The container for the printing capsule according to claim 1, wherein the base (200) and the cover (300) are integrally formed by a blister process, both the base (200) and the cover (300) are made of a non-transparent material, and a light-tight sealed space is formed for blocking external light.

3. The container for the printing capsule according to claim 2, wherein the housing (110) is provided with a limiting structure (120); when the base (200) and the cover (300) are closed, the limiting structure (120) contacts the printing capsule (600) located within the cavity (111) to limit movement of the printing capsule (600) within the cavity (111);
wherein the limiting structure (120) comprises a first limiting structure (210) and a second limiting structure (310), the first limiting structure (210) being provided on one of the base (200) or the cover (300);
wherein the second limiting structure (310) is provided on another one of the base (200) or the cover (300), the first limiting structure (210) cooperating with the second limiting structure (310);
wherein one of the first limiting structure (210) or the second limiting structure (310) fits a bottom of the printing capsule (600) to limit movement of the bottom; and
wherein another one of the first limiting structure (210) or the second limiting structure (310) fits a top of the printing capsule (600) to limit movement of the top.

4. The container for the printing capsule according to claim 3, wherein the second limiting structure (310) comprises a circumferential protruding ring (312); and
wherein the circumferential protruding ring (312) is configured to limit radial movement of the printing capsule (600), and an area of the housing enclosed by the circumferential protruding ring (312) is configured to limit axial movement of the printing capsule (600).

5. The container for the printing capsule according to any one of claims 1-4, wherein the base (200) and the cover (300) are openably and closably connected via a connection component (400), the connection component (400) comprising: a connecting member (410) and a snap-fit structure (500);
wherein the connecting member (410) is located between the base (200) and the cover (300) for connecting the base (200) and the cover (300); and
wherein the snap-fit structure (500) is provided at a peripheral edge of the housing (110) for locking the base (200) and the cover (300) in a closed state.

6. The container for the printing capsule according to claim 5, wherein the snap-fit structure (500) comprises: a first snap-fit structure (510) and a second snap-fit structure (520); and
wherein one of the first snap-fit structure (510) or the second snap-fit structure (520) is located at a peripheral edge of the base (200), and another one of the first snap-fit structure (510) or the second snap-fit structure (520) is located at a peripheral edge of the cover (300); and the first snap-fit structure (510) and the second snap-fit structure (520) are engaged with each other to secure the base (200) and cover (300) in the closed state.

7. The container for the printing capsule according to claim 3, wherein the limiting structure (120) is configured to accommodate and secure multiple printing capsules (600), and first limiting structures (210) and second limiting structures (310) respectively match shapes of the multiple printing capsules (600) to independently limit a position of each of the multiple printing capsules (600).

8. The container for the printing capsule according to any one of claims 1-4, wherein the base (200) is provided with a first opening-assist structure (220), and the cover (300) is provided with a second opening-assist structure (320) engaging with the first opening-assist structure (220); and
wherein one of the first opening-assist structure (220) or the second opening-assist structure (320) has a clearance (230), and another one of the first opening-assist structure (220) or the second opening-assist structure (320) is arranged to align with the clearance (230) to facilitate user opening.

9. The container for the printing capsule according to any one of claims 1-4, wherein a bottom of the base (200) is provided with a flat support portion (240), and the support portion (240) enables the printing capsule (600) to be stably placed in the housing (110).

10. A printing capsule kit, comprising the container (100) for the printing capsule according to any one of claims 1-9, and the printing capsule (600) enclosed in the container (100).

11. A printing capsule, comprising a receiving cavity and a light-transmissive component (620) located on one side of the receiving cavity.

12. The printing capsule according to claim 11, further comprising a build platform (630) and a forming cavity (631) between the build platform (630) and the light-transmissive component (620), wherein light is projected into the forming cavity (631) through the light-transmissive component (620), and the receiving cavity comprises the forming cavity (631).

13. The printing capsule according to claim 12, further comprising an outer cylinder (611) and an inner cylinder (612), wherein the outer cylinder (611) and the inner cylinder (612) are engaged in a plug-in manner, and the inner cylinder (612)is disposed in a cavity of the outer cylinder (611), wherein an inner-side wall of the outer cylinder (611) is sealed to an outer-side wall of the inner cylinder (612), and the cavity of the outer cylinder (611) communicates with a cavity of the inner cylinder (612) to form a closed receiving cavity; and wherein the light-transmissive component (620) is provided at a bottom of the outer cylinder (611), and the build platform (630) is provided on an end of the inner cylinder (612) facing the light-transmissive component (620).
